# EUROPÄISCHE PATENTSCHRIFT

(11) **EP 4 327 422 B1**
(45) Veröffentlichungstag und Bekanntmachung des Hinweises auf die Patenterteilung: **18.09.2024**
(21) Anmeldenummer: 22722810.3
(22) Anmeldetag: 14.04.2022
(51) Int. Cl.: H02G 3/04, B21D 28/10

(54) **AUS METALL HERGESTELLTE KABELRINNENKOMPONENTE, INSBESONDERE KABELRINNE ODER KABELRINNENDECKEL**
CABLE TRAY COMPONENT MADE OF METAL, MORE PARTICULARLY CABLE TRAY OR CABLE TRAY COVER
COMPOSANT DE CHEMIN DE CÂBLES CONSTITUÉ DE MÉTAL, PLUS PARTICULIÈREMENT CHEMIN DE CÂBLES OU COUVERCLE DE CHEMIN DE CÂBLES

(30) Priorität: 22.04.2021 DE 202021102161 U
(43) Veröffentlichungstag der Anmeldung: 28.02.2024
(73) Patentinhaber: OBO Bettermann Produktion Deutschland GmbH & Co.KG, 58710 Menden (DE)
(72) Erfinder: HOHMANN, Tim, 58675 Hemer (DE); KNOSSALLA, Robert, 58640 Iserlohn (DE); KUTSCHELIS, Kevin, 58675 Hemer (DE)
(74) Vertreter: Haverkamp Patentanwälte PartG mbB
(86) Internationale Anmeldenummer: PCT/EP2022/060006
(87) Internationale Veröffentlichungsnummer: WO 2022/223429

(56) Entgegenhaltungen:
- CN-U- 211 183 228
- DE-A1- 102005 018 812
- DE-A1- 102008 012 941
- DE-A1- 2 148 985
- KR-U- 19990 014 650
- KR-Y1- 200 493 248
- US-A- 2 068 988
- ANONYMOUS: "Leichtbau durch Sicken", 31 December 2013 (2013-12-31), pages 1 - 176, XP055944691, Retrieved from the Internet <URL:https://4ming.de/de/forming-handbuch/leichtbau-durch-sicken-fachbuch#Begriffsdefinition_Von_Sicken> [retrieved on 20220720]

## Beschreibung

Die Erfindung betrifft eine aus Metall hergestellte Kabelrinnenkomponente mit den Merkmalen des Anspruchs 1

Kabelrinnenkomponenten sind beispielsweise Kabelrinnen und Kabelrinnendeckel. Derartige Kabelrinnen werden zum Aufbau eines Kabeltragsystems miteinander verbunden und dienen zur Aufnahme insbesondere von Kabeln, wobei es sich hierbei beispielsweise um elektrische Kabel oder auch um Glasfaserkabel handeln kann. Zum Aufbau eines Kabeltragsystems werden Kabelrinnen auch mit Formverbindern miteinander verbunden, beispielsweise Eckverbindern, T-Stücken oder Rinnenkreuzungen. Derartige Kabelrinnenkomponenten verfügen mitunter über Ausbrechöffnungen. Hierbei handelt es sich um vorbereitete Öffnungen, die bedarfsweise geöffnet werden können, beispielsweise um Befestiger anzubringen oder auch um einen Kabelauslass bzw. einen Kabeleinlass bereitzustellen. Ausbrechöffnungen können in Abhängigkeit von ihrem vorgesehenen Zweck eine unterschiedliche Umrissgeometrie aufweisen. Im Falle von bedarfsweisen Befestigungsöffnungen sind diese typischerweise kreisrund. Handelt es sich bei solchen Ausbrechöffnungen um solche, die für einen Kabelein- oder Auslass vorgesehen sind, weisen diese typischerweise eine rechteckförmige Umrissgeometrie auf. Ausbrechöffnungen, durch die Befestigungsöffnungen bereitgestellt werden können, sind beispielsweise in EP 3 136 525 A1 beschrieben. Bei den in diesem Dokument beschriebenen Ausbrechöffnungen handelt es sich um bezüglich ihrer Stanztiefe teilausgestanzte Ausbrechbutzen, die umlaufend mit dem die spätere Ausbrechöffnung einfassenden Material der Kabelrinnenkomponente verbunden bleiben, und zwar solange, bis der Ausbrechbutzen zum Öffnen der Ausbrechöffnung durch Aus- bzw. Abschlagen entfernt worden ist. Durch Ausbrechen der Ausbrechöffnungen bzw. des die Ausbrechöffnung verschließenden Butzen werden diese als Ausbrechöffnungen angesprochen.

Ausbrechöffnungen werden auch bei anderen Komponenten eines Kabelrinnensystems eingesetzt, und zwar im Zusammenhang mit beispielsweise Unterfluranschlussdosen. Bei derartigen Komponenten sind Ausbrechöffnungen für die Kabelein- und Ausführung vorgesehen. Diese sind durch ein Lochraster vorgegeben, sodass in Abhängigkeit von der gewünschten Größe unterschiedlich viel Material zum Ausbilden einer solchen Ausbrechöffnung aus der Wand herausgebrochen werden kann. Derartige Ausbrechöffnungen eignen sich jedoch nicht für eine Verwendung im Zusammenhang mit Kabelrinnen, da mitunter Kanten entstehen, die bei einem Kabeldurchzug durch eine Rinne ein durchgezogenes Kabel bzw. seinen Mantel beschädigen könnten.

Kabelrinnenkomponenten mit Ausbrechbutzen sind beispielsweise bekannt auch aus KR 200 493 248 Y1 oder KR 1999 0014650 U. Die Ausbrechbutzen sind durch Einschnitte in den jeweiligen Boden der als Kabelrinne ausgelegten Kabelrinnenkomponente eingebracht. Beim Gegenstand der KR 200 493 248 Y1 verfügen die Ausbrechbutzen über eine Verprägung, um einen Abstandsspalt zwischen dem Umriss des Ausbrechbutzens und dem Boden der Kabelrinne bereitzustellen. DE 10 2005 018 812 A1, US 2,068,988 A1 und DE 10 2008 012 941 A1 beschreiben Wandungsteile von elektrischen Installationen mit Ausbrechbutzen. CN 211183228 U offenbart im Zusammenhang mit einem Betrieb von schwimmenden Offshore Kernkraftanlagen Kabelleiter mit durch Sicken versteiften Bodenteilen. Dass Bauteile durch Sicken versteift werden können, was wiederum dem Leichtbau dient, ist in "Leichtbau durch Sicken", 31. Dezember 2013 (2013-12-31), Seiten 1-176, beschrieben.

DE 21 48 985 A1 beschreibt ein Verfahren zum Herstellen einer als Abdeckblende oder Zwischenboden verwendbaren Platte für elektrische Geräte mit ausbrechbaren Plattenteilen. Bei diesem Stand der Technik werden die Ausbrechbutzen im Zuge eines Stanzvorganges nur zum Teil durchgestanzt, sodass diese umlaufend mit dem umgebenden Material der Kabelrinnenkomponente verbunden bleiben. Die Ausbrechbutzen sind in die gebildeten Öffnungen zurückgedrückt.

Ausgehend von dem zuletzt diskutierten Stand der Technik liegt der Erfindung daher die Ausgabe zugrunde, eine aus Metall hergestellte Kabelrinnenkomponente, insbesondere als Kabelrinne oder Kabelrinnendeckel ausgebildet, vorzuschlagen, bei der deren Ausbrechöffnungen nicht nur in einer Größe ausgelegt werden können, um als Kabelauslass bzw. Kabeleinlass dienen zu können, sondern durch die vor allem bei längeren Kabelrinnenkomponenten, wie beispielsweise Rinnen oder Deckeln, keine nennenswerte Spannung durch die Erstellung der Ausbrechöffnungen eingebracht ist.

Gelöst wird diese Aufgabe erfindungsgemäß durch eine eingangs genannte, gattungsgemäße Kabelrinnenkomponente mit den Merkmalen des Anspruchs 1.

Bei dieser Kabelrinnenkomponente sind die Ausbrechbutzen als Stanzbutzen aus der Öffnung der Kabelrinnenkomponente fast vollständig ausgestanzte und in die Öffnung zurückgeführte Stanzbutzen. Diese sind, solange die Ausbrechöffnung nicht geöffnet ist, über zumindest einen Anbindungssteg mit dem die Öffnung der Kabelrinnenkomponente begrenzenden Material verbunden. Von Besonderheit ist, dass in den Ausbrechbutzen wenigstens eine die Ausbrechbutze versteifende Struktur, typischerweise ausgeführt als Sicke, eingeprägt ist, und zwar dergestalt, dass durch diese die Grundfläche des Stanzbutzens, der nach seiner Zurückführung in die Stanzöffnung den späteren Ausbrechbutzen bildet, reduziert ist. Durch diese den Ausbrechbutzen versteifende Struktur wird erreicht, dass beim Prägen der Struktur Material in Richtung zu der eingeprägten Struktur gezogen wird. Durch dieses Hinziehen von Material, welches für die Ausprägung der versteifenden Struktur benötigt wird, wird die Grundfläche des Stanzbutzens entsprechend reduziert. Dass der Stanzbutzen als Ausbrechbutzen dennoch in der Stanzöffnung verbleibt, ist durch den zumindest einen verbliebenen Anbindungssteg begründet. Typischerweise ist der Ausbrechbutzen über mehrere, umfänglich verteilt angeordnete Anbindungsstege mit dem Randbereich der Ausbrechöffnung verbunden. Durch die Reduzierung der Grundfläche des Stanzbutzens durch das Einprägen einer solchen versteifenden Struktur ist ein unvermeidbarer Spaneinzug beim Zurückpressen des Stanzbutzens in die Stanzöffnung - die Ausbrechöffnung - unproblematisch, da aufgrund des Prägens keine Spannung in dem Randbereich der Ausbrechöffnung und somit in dem eine solche Ausbrechöffnung umgebenden Material der Kabelrinnenkomponente verbleibt. Dieses ist vor allem für Kabelrinnenkomponenten von Bedeutung, die eine Vielzahl von Ausbrechöffnungen aufweisen, wie beispielsweise Kabelrinnen oder Kabelrinnendeckel, bei denen Ausbrechöffnungen in einer zyklischen Folge über die Länge der Kabelrinnenkomponente vorgesehen sind. Bei einer solchen Kabelrinnenkomponente ist der Ausbrechbutzen nicht nur spannungsfrei innerhalb einer Ausbrechöffnung gehalten. Darüber hinaus wird durch die typischerweise als Sicke ausgeführte Prägestruktur die Steifigkeit des Ausbrechbutzens erhöht, was ein Entfernen desselben vereinfacht. Dieses kann im Unterschied zu vorbekannten Rinnenkomponenten dieser Art durch Heraushebeln, beispielsweise mittels eines Schraubendrehers, vorgenommen werden. Die eingeprägte versteifende Struktur verhindert ein unnötiges Verbiegen des Ausbrechbutzens, sodass die aufgewendete Hebelkraft direkt an dem oder den Anbindungsstegen anliegt. Hierzu verfügt der Ausbrechbutzen über eine Lochung zum Einsetzen bzw. Ansetzen eines solchen Hebelwerkzeuges.

Vorteilhaft bei dieser Kabelrinnenkomponente ist zudem, dass diese aufgrund der Möglichkeit des Heraushebelns sowohl von der Innenseite als auch von der Außenseite vorgenommen werden kann.

Die Anzahl der Anbindungsstege des Ausbrechbutzens wird man versuchen, gering zu halten. Typischerweise ist ein solcher Ausbrechbutzen über zwei bis vier Anbindungsstege mit dem Randbereich der Ausbrechöffnung verbunden. Im Falle einer rechteckförmigen Auslegung eines solchen Ausbrechbutzens kann sich ein solcher Anbindungssteg beispielsweise in der Mitte jeder Seite befinden. Es versteht sich, dass die Anbindungsstege auch an anderer Stelle angeordnet sein können, beispielsweise bei einer rechteckförmigen Auslegung in dem Bereich der Ecken.

Eine solche den Ausbrechbutzen versteifende Struktur ist gemäß einer möglichen Ausgestaltung einer solchen Kabelrinnenkomponente aus Blickrichtung ihrer Innenseite nach innen hin geprägt, mithin in das Aufnahmevolumen der Kabelrinnenkomponente hinein gerichtet. Demzufolgen bildet die den Ausbrechbutzen versteifende, typischerweise als Sicke ausgeführte Struktur, innerhalb beispielsweise des Bodens der Kabelrinnenkomponente eine der Tiefe der Einprägung entsprechende Erhöhung. Dies ist vorteilhaft, da in eine solche Kabelrinne bzw. Kabelrinnenkomponente eingezogene Kabel infolge dieser Struktur nicht an der Stanzkante aufliegen. Damit ist selbst bei einer unsauberen Bearbeitung Sorge dafür getragen, dass eingezogene Kabel an den mit einem Ausbrechbutzen verschlossenen Ausbrechöffnungen nicht beschädigt werden.

Da keine, jedenfalls keine nennenswerten Spannungen in die Kabelrinnenkomponente durch die in den Ausbrechöffnungen gehaltenen Ausbrechbutzen eingekoppelt werden, können diese gegenüber herkömmlichen Ausbrechbutzen bezüglich ihrer Grundfläche auch deutlich größer dimensioniert werden.

Gemäß einer bevorzugten Ausgestaltung wird, vor allem wenn die Grundfläche eines solchen Ausbrechbutzens gegenüber herkömmlichen größer vorgesehen ist, die Sicke ringförmig ausgestaltet, wobei diese der Umrissgeometrie des Ausbrechbutzens zumindest weitestgehend folgt. Eine solche Ausgestaltung der Sicke führt zugleich zu einer Aussteifung des Ausbrechbutzens über seine gesamte Fläche, sodass diese selbst bei relativ groß dimensionierten Ausbrechbutzen problemlos durch Heraushebeln mit einem Öffnungswerkzeug, beispielsweise der Klinge eines Schraubendrehers, aus der Ausbrechöffnung zum Öffnen einer Ausbrechöffnung entfernt werden können.

Bei einer eckigen Umrissgeometrie des Ausbrechbutzens ist eine solche umlaufende Sicke in den Eckabschnitten vorzugsweise stärker ausgeprägt, um die gewünschte Grundrissverkleinerung auch in den Eckbereichen des Ausbrechbutzens zu realisieren. Auf diese Weise lässt sich ein umfänglich weitestgehend gleichbleibender Spalt erzeugen. Eine solche stärkere Ausprägung einer ringförmigen Sicke in ihren Eckabschnitten kann beispielsweise durch eine tiefere und/oder breitere Sickenform herbeigeführt werden. Möglich ist es auch, anstelle oder ergänzend zu den vorstehend genannten Maßnahmen den Verlauf der Sicke in den Eckausbildungen zu ändern, sodass in diesen Abschnitten des Sickenverlaufs diese nicht parallel zum äußeren Rand des Ausbrechbutzens verläuft. Gemäß einer Ausgestaltung eines solchen Sickenverlaufes sind die Eckausbildungen der ringförmigen Sicke nach außen etwas ausgestellt. Dieses führt dazu, dass die Sicke in ihren Eckausbildungen zu dem äußeren Rand des Ausbrechbutzens einen kleineren Abstand aufweist als in den dazwischen liegenden Sickenabschnitten.

Zum Heraushebeln des Ausbrechbutzens dienen in aller Regel in den Ausbrechbutzen eingebrachte Löcher, typischerweise ausgebildet als Langlöcher, damit das Ende einer Schraubendreherklinge darin eingesetzt werden kann. Die Anbindungsstege sind durch den Herstellungsprozess für ein Ausbrechen des Ausbrechbutzens vorbereitet, sodass der oder die Anbindungsstege bereits mit relativ geringer Krafteinwirkung auf den Ausbrechbutzen ausbrechen.

Hergestellt wird eine solche Ausbrechöffnung, indem aus der die Ausbrechöffnung aufweisenden Begrenzung der Kabelrinnenkomponente bzw. des Werkstückes, aus dem diese hergestellt wird, der Ausbrechbutzen mit Ausnahme seines einen oder seiner mehreren Anbindungsstege aus dem Material des für die Erstellung der Kabelrinnenkomponente eingesetzten Werkstückes ausgestanzt und anschließend der ausgestanzte Butzen - der Stanzbutzen - in die durch den Stanzvorgang geschaffene Öffnung zurückgedrückt wird. Bei diesem Prozess werden die Anbindungsstege zweimal umgeformt, wodurch diese eine gewisse Kaltverfestigung erfahren. Dadurch sind der oder die Anbindungsstege spröder als das angrenzende Material des Ausbrechbutzens bzw. der Ausbrechöffnung. Daher können diese durch Einbringen einer entsprechenden Ausbrechkraft auf den Ausbrechbutzen aufgrund seiner Versteifung durch die Sicke ohne weiteres aus der Ausbrechöffnung herausgebrochen werden.

Die Anbindungsstege dienen allein dem Zweck, einen Ausbrechbutzen innerhalb der Ausbrechöffnung zu halten. Diese können daher recht schmal gehalten sein, beispielsweise 2,0 - 4,0 mm. Die Anbindungsstege müssen jedoch eine hinreichende Breite aufweisen, damit diese weder beim Stanzvorgang, bei dem der Stanzbutzen aus der Öffnung herausbewegt wird, noch beim Zurückdrücken des Stanzbutzens in die Ausbrechöffnung abrei-βen.

Eine solche Kabelrinnenkomponente kann beschichtet sein, beispielsweise feuerverzinkt oder kunststoffbeschichtet, ohne die beschriebenen Eigenschaften der Ausbrechöffnung zu beeinträchtigen, auch wenn der einen Ausbrechbutzen umgebende Spalt durch die Beschichtung verfüllt wird.

Nachfolgend ist die Erfindung anhand eines Ausführungsbeispiels unter Bezugnahme auf die beigefügten Figuren beschrieben. Es zeigen:
- **Fig. 1:**: Einen Ausschnitt einer perspektivischen Darstellung einer als Kabelrinne ausgeführten Kabelrinnenkomponente,
- **Fig. 2:**: eine vergrößerte Draufsicht auf eine Kabelrinnensektion mit Ausbrechöffnungen und
- **Fig. 3a bis 3c:**: eine Schnittdarstellung durch eine Ausbrechöffnung entlang der Linie A - B der Figur 2 in drei Schritten ihres Herstellungsprozesses.

Eine Kabelrinne 1, hergestellt aus einem für Kabelrinnen üblicherweise eingesetzten Stahlwerkstoff, umfasst einen Boden 2 und zwei daran angeformte Seitenholme 3, 4. Die Seitenholme 3, 4 verlaufen in Längserstreckung der Kabelrinne 1. In den Boden 2 der Kabelrinne 1 sind eine Vielzahl von nebeneinanderliegenden Bodensicken 5 eingeprägt. Die Form der Bodensicken 5 ist in einer Draufsicht knochenförmig durch die in Längsrichtung der Kabelrinne 1 verdickten Sickenenden. Die Prägerichtung der Bodensicken 5 weist nach außen und ist somit von dem durch den Boden 2 und die Seitenholme 3, 4 eingefassten Rinnenvolumen wegweisend. Bei der Kabelrinne 1 sind die quer verlaufenden Bodensicken 5 zu Bodensickengruppen gruppiert. Jede Bodensickengruppe ist durch eine Rinnensektion 6 mit Ausbrechöffnungen 7 getrennt. Dieses wiederholt sich über die Länge der Kabelrinne 1 mehrfach. In jeder Rinnensektion 6 sind mehrere Ausbrechöffnungen 7 in Querrichtung der Kabelrinne 1 nebeneinander angeordnet.

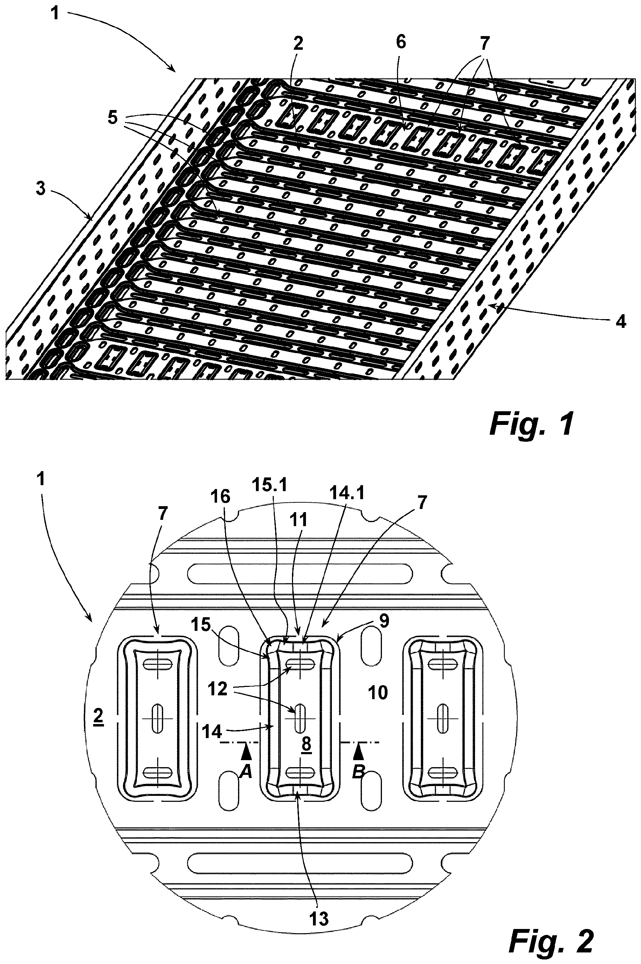

Figur 2 zeigt in einer vergrößerten Darstellung einen Ausschnitt der Rinnensektion 6 mit ihren Ausbrechöffnungen 7. Die Ausbrechöffnungen 7 sind bei dem dargestellten Ausführungsbeispiel gleich ausgeführt, auch in Bezug auf ihre Umrissgeometrie. Nachfolgend ist die in Figur 2 gezeigte mittlere Ausbrechöffnung 7 näher erläutert. Dieselben Ausführungen gelten gleichermaßen für die übrigen Ausbrechöffnungen 7.

Jede Ausbrechöffnung 7 ist bei Nichtbenutzung durch einen Ausbrechbutzen 8 verschlossen. Dieser kann aus dem Boden 2 ohne weiteres herausgebrochen werden, wenn eine bodenseitige Öffnung bereitgestellt werden soll. Das Öffnen der Ausbrechöffnung 7 durch Heraushebeln des Ausbrechbutzens 8 kann sowohl von der Rinneninnenseite als auch von der Rinnenaußenseite her vorgenommen werden.

Der Ausbrechbutzen 8 ist durch einen nicht vollständig umlaufenden Einschnitt 9 von dem die zu erstellende Öffnung im Boden 2 einfassenden Material 10 der Kabelrinne 1 getrennt. Diese Trennung ist jedoch nicht umlaufend. Der Ausbrechbutzen 8 ist an einigen Stellen durch einen Anbindungssteg 11 mit dem Randbereich 10 der Ausbrechöffnung 7 verbunden. Die Umrissgeometrie des Ausbrechbutzens 8 bei dem dargestellten Ausführungsbeispiel ist rechteckförmig mit gerundeten Ecken. Jeweils ein Anbindungssteg 11 befindet sich im Bereich der Mitte jeder Seite. Durch die Anbindungsstege 11 ist der Ausbrechbutzen 8 prozesssicher im Boden 2 der Kabelrinne 1 gehalten. Der Ausbrechbutzen 8 verfügt über eine durch mehrere Langlöcher bereitgestellte Lochung 12. Diese dient zur Aufnahme eines Öffnungswerkzeuges, beispielsweise der Klinge eines Schraubendrehers, wenn der Ausbrechbutzen 8 aus dem Boden 2 der Kabelrinne 1 herausgebrochen werden soll.

Der Ausbrechbutzen 8 ist bei dem dargestellten Ausführungsbeispiel durch eine umlaufende und somit ringförmige Sicke 13 als den Ausbrechbutzen 8 versteifende Prägung strukturiert. Die Prägerichtung der Sicke 13 ist ebenso wie die Prägerichtung der Bodensicken 5 nach innen zum Rinneninneren hin gerichtet. Die Sicke 13 folgt bezüglich ihres Verlaufes der Umrisskontur des Ausbrechbutzens 8. In den Eckausbildungen ist die Sicke 13 in Bezug auf das zum Ausbilden derselben erforderliche Material stärker ausgeprägt. Bei dem dargestellten Ausführungsbeispiel ist dieses dadurch erreicht, dass der Übergang von einem der Längs- oder Querseite des Ausbrechbutzens 8 folgenden geraden Abschnitt im Übergang zu dem geraden Abschnitt der benachbarten Seite der Verlauf der Sicke 13 zunächst zum Rand des Ausbrechbutzens 8 hin vorgesehen ist, bevor ein gegenläufig gekrümmter Sickenabschnitt die Verbindung zu dem benachbarten Übergangsabschnitt herstellt. Damit gehen zwei gerade Abschnitte, beispielsweise die Abschnitte 14, 14.1 der Sicke 13, zunächst in einen zum Rand des Ausbrechbutzens 8 hin gekrümmten Übergangsabschnitt 15, 15.1 über, bevor die beiden Übergangsabschnitte 15, 15.1 durch einen gegensinnig gekrümmten Eckabschnitt 16 verbunden sind. Eine Eckausbildung der Sicke 13 umfasst somit die Übergangsabschnitte 15, 15.1 und den Eckabschnitt 16. Aufgrund dieser Eckausbildung ist der Abstand der Sicke 13 von dem äußeren Rand des Ausbrechbutzens 8 im Bereich des Eckabschnittes 16 kleiner als in den geraden Abschnitten 14, 14.1.

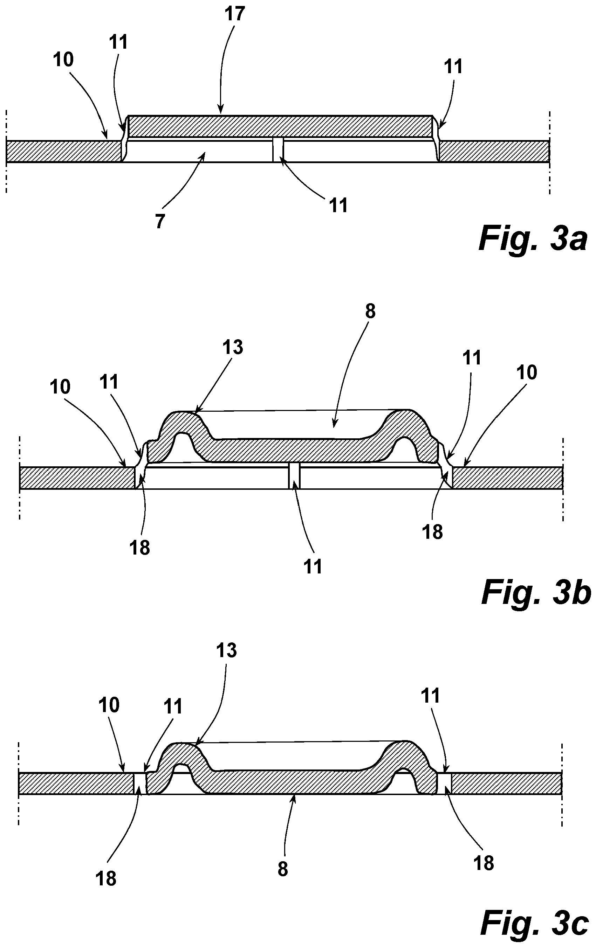

Hergestellt wird die Ausbrechöffnung 7 in mehreren aufeinanderfolgenden Schritten. In einem ersten Schritt wird die Lochung und somit auch die Lochung 12 in eine den späteren Boden 2 der Kabelrinne 1 bildende Platine als metallenes Werkstück eingebracht. Zum Ausbilden der Ausbrechöffnungen 7 wird in einem nachfolgenden Schritt der Einschnitt 9 zum Heraustrennen eines Stanzbutzens 17 in den Boden 2 eingebracht, wodurch ein Stanzbutzen 17 aus der Ebene des Bodens 2 in das Innere der Kabelrinne 1 herausgedrückt wird, wie dieses schematisiert in Figur 3a gezeigt ist. Der Stanzbutzen 17 bleibt über die Anbindungsstege 11 mit dem Randbereich 10 der Ausbrechöffnung 7 verbunden. Nachfolgend wird die Sicke 13 in den Stanzbutzen 17 zur Ausbildung des fertigen Ausbrechbutzens 8 ebenfalls in Richtung zum Inneren der Kabelrinne 1 eingeprägt. Diese Situation nach Einprägen der Sicke 13 ist in Figur 3b gezeigt. Das Einbringen der Sicke 13 dient dem Zweck, die Grundfläche des Stanzbutzens 17 zu verkleinern, sodass der Ausbrechbutzen 8 spannungslos oder zumindest weitgehend spannungslos in die Ausbrechöffnung 7 zurückgedrückt werden kann und in dieser allein durch die Anbindungsstege 11 gehalten ist. Es versteht sich, dass beim Zurückdrücken des Ausbrechbutzens 8 in die geschaffene Öffnung 7 aufgrund des vergrößerten, den Stanzbutzen 8 umgebenden Spaltes 18 selbst unter Umständen vorhandene Späne und die Anbindungsabschnitte 11 nicht zu einem Einbau von Spannungen in dem Öffnungsrandbereich und damit in dem Boden 2 der Kabelrinne 1 führen. Diese Spannungen sind durch die vorbeschriebene Verkleinerung der Grundfläche des Stanzbutzens 17 durch Einprägen der Sicke 13 zur Ausbildung des Ausbrechbutzens 8 eliminiert. Durch die Sickung wird Material von dem Randbereich des Stanzbutzens 17 in Richtung zu der Sickeneinprägung gezogen. Damit dieses auch in den Ecken des Stanzbutzens 17 erfolgt, ist die Einprägung der Sicke 13 in den Eckausbildungen stärker ausgeführt, um genügend Material aus der Ecke in Richtung zum Zentrum des Stanzbutzens 17 ziehen zu können.

Nach dem Sickenprägen wird der Ausbrechbutzen 8 in die durch den Stanzvorgang geschaffene Öffnung 7 zurückgedrückt (siehe Figur 3c).

Typischerweise entsteht durch den Prozess des Einprägens der Sicke 13 ein um den Ausbrechbutzen 8 umlaufender Spalt 18 geringer Spaltweite. Dieser kann in einem nachfolgenden Beschichtungsprozess, beispielsweise einer Verzinkung oder Kunststoffbeschichtung der Kabelrinne überdeckt bzw. verfüllt werden, ohne die Funktionalität der Ausbrechöffnung 7 in Bezug auf ein Ausbrechen des Ausbrechbutzens 8 zu beeinträchtigen.

Durch die Sicke 13 ist der Ausbrechbutzen 8 zudem über seine Fläche versteift, sodass eine über eine der Lochungen 12 eingebrachte Öffnungskraft auf die gesamte Grundfläche des Ausbrechbutzens 8 verteilt wird. Die Anbindungsstege 11 sind durch ihre zweifache Umformung zudem spröder als das angrenzende Material im Ausbrechbutzen 8 und dem Randbereich 10 der Ausbrechöffnung 7, sodass durch diese Materialeigenschaft in Bezug auf ein Ausbrechen des Ausbrechbutzen 8 vorteilhafte Materialeigenschaften eingestellt sind.

In dem in den Figuren beschriebenen Ausführungsbeispiel sind die Ausbrechöffnungen 7 in dem Boden 2 einer Kabelrinne 1 erläutert worden. Es versteht sich, dass diese auch in den Seitenholmen oder in anderen Kabelrinnenkomponenten, wie beispielsweise einem Rinnendeckel oder auch Verbindern, beispielsweise auch Formverbindern, mit denselben Vorteilen vorgesehen sein können.

Die Erfindung ist anhand von Ausführungsbeispielen beschrieben worden. Ohne den Umfang der geltenden Ansprüche zu verlassen, ergeben sich für einen Fachmann zahlreiche weitere Möglichkeiten, die Erfindung umzusetzen, ohne dass dieses im Rahmen dieser Ausführungen im Einzelnen erläutert werden müsste.

### Bezugszeichenliste

- 1: Kabelrinne
- 2: Boden
- 3: Seitenholm
- 4: Seitenholm
- 5: Bodensicke
- 6: Sektion der Kabelrinne
- 7: Ausbrechöffnung
- 8: Ausbrechbutzen
- 9: Einschnitt
- 10: Öffnungsrandbereich
- 11: Anbindungssteg
- 12: Lochung
- 13: Sicke
- 14, 14.1: gerader Abschnitt
- 15, 15.1: Übergangsabschnitt
- 16: Eckabschnitt
- 17: Stanzbutzen
- 18: Spalt

## Patentansprüche

1. Aus Metall hergestellte Kabelrinnenkomponente (1) mit von über die Länge der Kabelrinnenkomponente (1) verteilt angeordneten, durch jeweils einen Ausbrechbutzen (8) verschlossenen Ausbrechöffnungen (7) zum bedarfsweisen Erstellen jeweils einer die Kabelrinnenkomponente (1) durchgreifenden Öffnung durch Entfernen eines Ausbrechbutzens (8), etwa zum Bereitstellen eines Kabelauslasses, wobei bei einer solchen Ausbrechöffnung (7) der Ausbrechbutzen (8) als aus einer zu erstellenden Öffnung der Kabelrinnenkomponente (1) fast vollständig ausgestanzter und in die Öffnung zurückgeführter Stanzbutzen innerhalb einer Stanzöffnung sitzt, allerdings über zumindest einen Anbindungssteg (11) mit dem Randbereich (10) der Ausbrechöffnung (7) der Kabelrinnenkomponente (1) verbunden ist und wobei durch den Prozess des Ausstanzens und Zurückführens des Stanzbutzens in die Stanzöffnung der zumindest eine Anbindungssteg (11) eine Kaltverfestigung erfahren hat und somit spröder ist als das an diesen angrenzende Material, **dadurch gekennzeichnet, dass** in den die Ausbrechöffnung (7) verschließenden Ausbrechbutzen (8) wenigstens eine den Ausbrechbutzen (8) versteifende Struktur (13) eingeprägt ist, durch die die Grundfläche des Ausbrechbutzens (8) gegenüber der Grundfläche des zum Bereitstellen der Ausbrechöffnung (7) ausgestanzten Stanzbutzens (17) - dem späteren Ausbrechbutzen (8) - reduziert ist.

2. Kabelrinnenkomponente nach Anspruch 1, **dadurch gekennzeichnet, dass** der Ausbrechbutzen (8) über mehrere, umfänglich verteilt angeordnete Anbindungsstege (11) mit dem Randbereich (10) der Ausbrechöffnung (7) verbunden ist.

3. Kabelrinnenkomponente nach Anspruch 2, **dadurch gekennzeichnet, dass** der Ausbrechbutzen (8) eine rechteckförmige Grundfläche, vorzugsweise mit gerundeten Ecken, aufweist und über einen an jeder Umrissseite, insbesondere mittig angeordneten Anbindungssteg (11) mit dem Randbereich (10) der Ausbrechöffnung (7) verbunden ist.

4. Kabelrinnenkomponente nach einem der Ansprüche 1 bis 3, **dadurch gekennzeichnet, dass** die zumindest eine den Ausbrechbutzen (8) versteifende Struktur (13) in ein Aufnahmevolumen der Kabelkomponente (1) hinein gerichtet ausgeführt ist.

5. Kabelrinnenkomponente nach einem der Ansprüche 1 bis 4, **dadurch gekennzeichnet, dass** die in den Ausbrechbutzen (8) eingeprägte versteifende Struktur als Sicke (13) ausgeführt ist.

6. Kabelrinnenkomponente nach Anspruch 5, **dadurch gekennzeichnet, dass** der Ausbrechbutzen (8) eine ringförmige, seinem Umriss mit Abstand zu seinem Rand folgende Sicke (13) aufweist.

7. Kabelrinnenkomponente nach Anspruch 6, **dadurch gekennzeichnet, dass** bei einer mehreckigen Umrissgeometrie des Ausbrechbutzens die Sicke (13) in den Eckabschnitten stärker ausgeprägt ist als in den angrenzenden geraden Abschnitten.

8. Kabelrinnenkomponente nach Anspruch 7, **dadurch gekennzeichnet, dass** die stärkere Ausprägung der Sickenecken durch eine tiefere und/oder breitere Sickenform herbeigeführt ist.

9. Kabelrinnenkomponente nach Anspruch 7 oder 8, **dadurch gekennzeichnet, dass** die stärkere Ausprägung der Sickenecken durch einen in Abschnitten nicht parallelen Verlauf der Sicke (13) zum Rand des Ausbrechbutzens (8) herbeigeführt ist.

10. Kabelrinnenkomponente nach Anspruch 9, **dadurch gekennzeichnet, dass** die Sicke (13) in ihren Eckausbildungen zu dem Rand des Ausbrechbutzens (8) einen kleineren Abstand aufweist als in den zwischen zwei Eckausbildungen befindlichen Sickenabschnitten.

11. Kabelrinnenkomponente nach einem der Ansprüche 1 bis 10, **dadurch gekennzeichnet, dass** die Ausbrechbutzen (8) ein oder mehrere Öffnungslöcher zum Einsetzen eines Öffnungswerkzeuges, etwa der Klinge eines Schraubendrehers, aufweisen.

12. Kabelrinnenkomponente nach einem der Ansprüche 1 bis 11, **dadurch gekennzeichnet, dass** diese ein beschichtetes Stahlblechteil ist.

13. Kabelrinnenkomponente nach einem der Ansprüche 1 bis 12, **dadurch gekennzeichnet, dass** die Kabelrinnenkomponente eine Kabelrinne (1) oder ein Kabelrinnendeckel ist.

## Claims

1. Cable tray component (1) made of metal, having knockout openings (7) arranged distributed over the length of the cable tray component (1), in each case closed by knockout pieces (8) for creating, as needed, one opening each extending through the cable tray component (1) by the removal of a knockout piece (8), such as, for example, in order to provide a cable outlet, wherein, with such a knockout opening (7), the knockout piece (8) is almost entirely punched out of an opening which is to be formed in the cable tray component (1), and sits inside a punched opening, as a punched piece guided back into the opening, but is nevertheless still connected by means of at least one connecting portion (11) to the edge region (10) of the knockout opening (7) of the cable tray component (1), and wherein, by the process of punching out and guiding the punched piece into the punched opening, the at least one connecting portion (11) has undergone cold working, and is therefore more brittle than the material adjacent to it, **characterised in that** at least one structure (13), which stiffens the knockout piece (8), is stamped into the knockout piece (8) which closes the knockout opening (7), by means of which structure the base area of the knockout piece (8) is reduced in comparison with the base area of the punched piece (17), which later becomes the knockout piece (8), punched out in order to provide the knockout opening (7),

2. Cable tray component according to claim 1, **characterised in that** the knockout piece (8) is connected to the edge region (10) of the knockout opening (7) by means of several circumferentially arranged connecting portions (11).

3. Cable tray component according to claim 2, **characterised in that** the knockout piece (8) has a rectangular base area, preferably with rounded edges, and is connected to the edge region (10) of the knockout opening (7) by means of a connecting portion (11) arranged at each profile side, in particular in the middle.

4. Cable tray component according to any one of claims 1 to 3, **characterised in that** the at least one structure (13) stiffening the knockout piece (8) is aligned directed into a reception volume space of the cable [*tray*] component (1)

5. Cable tray component according to any one of claims 1 to 4, **characterised in that** the stiffening structure stamped into the knockout piece (8) is configured as a bead (13).

6. Cable tray component according to claim 5, **characterised in that** the knockout piece (8) comprises a ring-shaped bead (13) which follows the contour of the knockout piece with a spacing interval from its edge.

7. Cable tray component according to claim 6, **characterised in that,** with a polygonal profile geometry of the knockout piece, the bead (13) is stamped more substantially into the corner sections than into the adjacent straight section.

8. Cable tray component according to claim 7, **characterised in that** the more substantial stamping of the bead corners is incurred by a deeper and/or wider bead shape.

9. Cable tray component according to claim 7 or 8, **characterised in that** the more substantial stamping of the bead corners is incurred by a course of the bead (13) which in some sections does not run parallel in relation to the edge of the knockout piece (8).

10. Cable tray component according to claim 9, **characterised in that** the bead (13) has a smaller spacing interval to the edge of the knockout piece (8) in its corner formations than in the bead sections which are located between two corner formations.

11. Cable tray component according to any one of claims 1 to 10, **characterised in that** the knockout pieces (8) comprise one or more opening holes for inserting an opening tool, such as the blade of a screwdriver.

12. Cable tray component according to any one of claims 1 to 11, **characterised in that** this is a coated sheet steel component.

13. Cable tray component according to any one of claims 1 to 12, **characterised in that** the cable tray component is a cable tray (1) or a cable tray cover.

## Revendications

1. Composant de chemin de câbles (1) constitué de métal, comportant des ouvertures (7) à percer réparties sur la longueur du composant de chemin de câbles (1), chacune fermée par une réservation (8) afin de réaliser, en fonction des besoins, une ouverture qui traverse le composant de chemin de câbles (1) en enlevant une réservation (8), pour mettre par exemple à disposition une sortie de câble ; la réservation (8) pour une telle ouverture (7) à percer étant logée dans une ouverture d'estampage, sous la forme d'une réservation presque totalement estampée pour réaliser une ouverture dans le composant de chemin de câbles (1) et repoussée dans l'ouverture, en restant cependant reliée par au moins une patte de liaison (11) avec la zone périphérique (10) de l'ouverture (7) à percer du composant de chemin de câbles (1) et, à l'issue du processus d'estampage et de repoussage de la réservation dans l'ouverture d'estampage, l'au moins une patte de liaison (11), laquelle a subi un durcissement à froid, étant devenue plus friable que le matériau contigu à celle-ci, **caractérisé en ce que** dans la réservation (8) fermant l'ouverture (7) à percer, est empreinte au moins une structure (13) rigidifiant la réservation (8) par laquelle la surface de base de la réservation (8) est réduite par rapport à la surface de base de la réservation à estamper (17) - qui deviendra plus tard la réservation (8) - permettant la mise à disposition l'ouverture (7) à percer,

2. Composant de chemin de câbles selon la revendication 1, **caractérisé en ce que** la réservation (8) est reliée avec la zone périphérique (10) de l'ouverture (7) à percer par plusieurs pattes de liaison (11) réparties sur le pourtour.

3. Composant de chemin de câbles selon la revendication 2, **caractérisé en ce que** la réservation (8) présente une surface de base de forme rectangulaire, en privilégiant des angles arrondis, et qu'elle est reliée avec la zone périphérique (10) de l'ouverture (7) à percer par une patte de liaison (11) disposée sur chaque côté de son contour, notamment placée de manière centrée.

4. Composant de chemin de câbles selon l'une des revendications 1 à 3, **caractérisé en ce que** l'au moins une structure (13) rigidifiant la réservation (8) est réalisée dans un volume de réception du composant de chemin de câbles (1).

5. Composant de chemin de câbles selon l'une des revendications 1 à 4, **caractérisé en ce que** la structure rigidifiante empreinte dans la réservation (8) est conformée en forme de moulure (13).

6. Composant de chemin de câbles selon la revendication 5, **caractérisé en ce que** la réservation (8) présente une moulure (13) de forme circulaire, qui suit son contour à distance de son bord.

7. Composant de chemin de câbles selon la revendication 6, **caractérisé en ce que,** dans le cas d'une géométrie du contour de la réservation avec plusieurs angles, la moulure (13) est plus fortement marquée dans les tronçons d'angle que dans les tronçons contigus droits.

8. Composant de chemin de câbles selon la revendication 7, **caractérisé en ce que** le marquage plus prononcé dans les angles des moulures est réalisé au moyen d'une moulure de forme plus profonde et/ou plus large.

9. Composant de chemin de câbles selon la revendication 7 ou 8, **caractérisé en ce que** le marquage plus prononcé dans les angles des moulures est réalisé au moyen d'un tracé de moulure (13) qui n'est, dans certains tronçons, pas parallèle au bord de la réservation (8).

10. Composant de chemin de câbles selon la revendication 9, **caractérisé en ce que** la moulure (13) présente au niveau de ses formations d'angle une distance plus petite par rapport au bord de la réservation (8) que dans les tronçons de moulures situés entre deux formations d'angle.

11. Composant de chemin de câbles selon l'une des revendications 1 à 10, **caractérisé en ce que** les réservations (8) présentent un ou plusieurs trous d'ouverture destinés à y insérer un outil d'ouverture, par exemple la lame d'un tournevis.

12. Composant de chemin de câbles selon l'une des revendications 1 à 11, **caractérisé en ce que** celui-ci est réalisé en tôle d'acier munie d'un revêtement.

13. Composant de chemin de câbles selon l'une des revendications 1 à 12, **caractérisé en ce que** le composant de chemin de câbles est un chemin de câbles (1) ou un couvercle de chemin de câbles.
